# EUROPEAN PATENT APPLICATION

(11) **EP 0 948 208 A1**
(43) Date of publication of application: **06.10.1999**
(21) Application number: 99200582.7
(22) Date of filing: 02.03.1999
(51) Int. Cl.: H04N 7/26

(54) **Improvements in or relating to high definition encoding**

(30) Priority: 03.04.1998 GB 9807205
(71) Applicant: NDS LIMITED, West Drayton, Middlesex UB7 ODQ (GB)
(72) Inventor: Davies, Colin, Fordingbridge, Hampshire SP6 2NS (GB); Murray, Kevin Alistair, Romsey, Hants SO51 0JR (GB); Huggett, Anthony Richard, Eastleigh, Hampshire SO50 5PZ (GB); Bock, Alois Martin, Eastleigh, Hampshire SO53 4RH (GB); Funnel, John Stuart, Southampton SO15 2TU (GB); Trimboy, Neil Adrian, North Baddesley, Southampton SO52 9FY (GB); Pledge, Jonathan George William, Winchester, Hampshire SO23 7PY (GB); Warburton, Richard John, Hedge Emd, Southampton SO30 2RP (GB); Stubbings, Clive Anthony, Eastleigh, Hampshire SO50 7NW (GB)
(74) Representative: Anderson, Angela Mary

(57) **Abstract**

According to one aspect of the present invention there is provided a digital television system of the type comprising a splitter for splitting a television image into a spatial array of elements; a plurality of encoders for encoding each of the elements; a combiner for re-combining the encoded elements such that they are capable of regenerating the television image; wherein the television system further includes a co-ordinator which spatially and temporally arranges the encoded elements such that the combiner can recombine the elements to be in the correct position spatially and temporally.

This has a number of advantages over the prior art. In particular the invention provides the advantage that the system is fully synchronised and then the recombiner can accurately put together the elements so as to produce an encoded version of the original image.

## Description

This invention relates to improvements in the encoding of High Definition Television (HDTV) signals. In particular, this invention provides synchronisation for a real time, high quality encoding system for a HDTV signal.

In recent years the interest in HDTV has been growing and with the advent of digital television the idea of digital High Definition Television (DHDTV) has materialised. There have been a number of tests which suggest that DHDTV is feasible and now the need exists for a fully operational system which is affordable and practical.

HDTV can come in a myriad of different formats; the table below shows five main formats:-

| **Horizontal Pixels** | **Vertical Lines** | **Frames/s** | **Pixel Rate 10**^{**6**} **pixel/s** | **Aspect Ratio** |
|---|---|---|---|---|
| 1920 | 1080 | 30 | 62.28 | 16 : 9 |
| 1280 | 720 | 60 | 55.296 | 16 : 9 |
| 704 | 480 | 60 | 20.275 | 16 : 9 or 4 : 3 |
| 640 | 480 | 30 | 10.138 | 4 : 3 |
| 1280 | 720 | 30 | 27.648 | 16 : 9 |

Prior to this invention the generation of digitally compressed HDTV signals required costly encoding equipment due to the size and high sampling rates used to transmit HDTV signals.

In addition early adopters of HDTV technology may be required to continue to provide standard sized (SD) programming. Using the currently proposed HDTV methods SD programming may not be supported.

Accordingly one object of the present invention is to overcome the problems associated with the prior art. This has been described in detail in our co-pending United Kingdom patent application 9807206.9.

According to one aspect of the present invention there is provided a digital television system of the type comprising a splitter for splitting a television image into a spatial array of elements; a plurality of encoders for encoding each of the elements; a combiner for re-combining the encoded elements such that they are capable of regenerating the television image; wherein the television system further includes a co-ordinator which spatially and temporally arranges the encoded elements such that the combiner can recombine the elements to be in the correct position spatially and temporally.

This has a number of advantages over the prior art. In particular the invention provides the advantage that the system is fully synchronised and then the recombiner can accurately put together the elements so as to produce an encoded version of the original image.

According to a second aspect of the present invention, there is provided a method of processing a digital television signal comprising splitting a television image into a spatial array of elements; encoding each of the elements with a separate encoder; re-combining the encoded elements such that they are capable of regenerating the television image; wherein the method further includes spatially and temporally coordinating the encoded elements such that the re-combination of the elements is correct spatially and temporally.

Reference will now be made by way of example to the accompanying drawings, in which:-
Figure 1 is a block diagram of an HDTV system according to the present invention; and
Figure 2 is a block diagram of a HDTV image to show how the figure 1 system works.

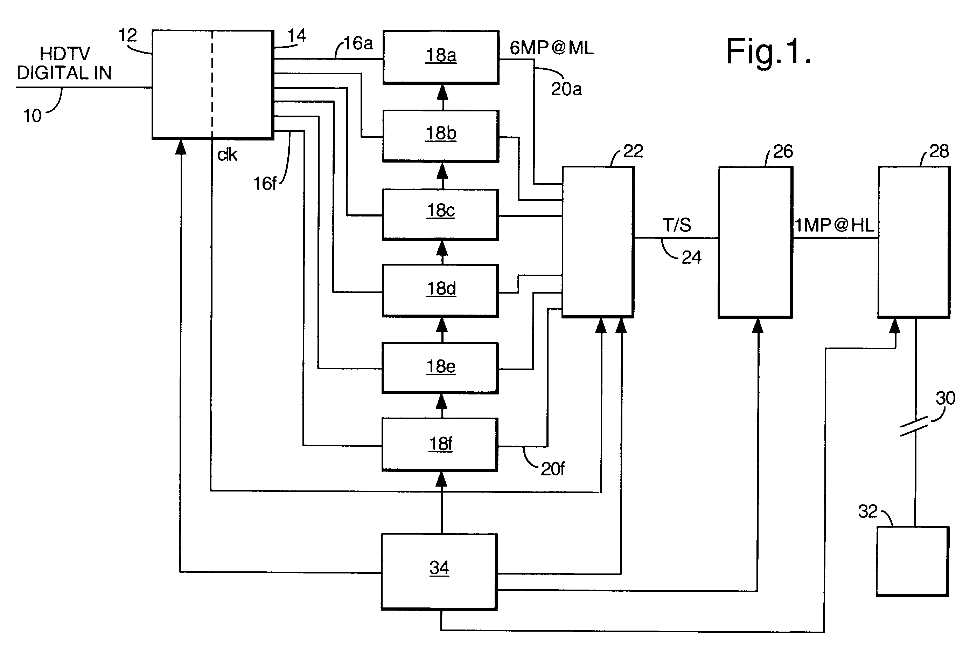

The HDTV system of the present invention is shown in figure 1. An HDTV digital input 10 is passed into a pre-processor 12. The pre-processor carries out the filtering noise reduction, colour space sub sampling and addition of synchronisation on the HDTV image. The HDTV signal is then split into a number of smaller sized images or elements by splitter 14. Further details of the function of the pre-processor and the synchronisation of the system are described below. The number of elements will be dependant on the profile of the original HDTV image. In the example shown the HDTV image is split into six signals: 16a-16f. Each of the six signals 16a - 16f are then passed to respective encoders 18a - 18f. Each of the encoders is slightly modified such that it does not carry out the normal pre-processing steps prior to encoding. This is due to the fact that the pre-processing of the whole HDTV image has already been carried out in pre-processor 12. The encoders then compress the six signals 16a - 16f to produce six so-called MPEG MP @ ML signals 20a - 20f (Main profile @ Main Level).

The six MPEG signals 20a - 20f are then multiplexed together by multiplexer 22 to form a single output transport stream 24. The multiplexer may or may not be operating as a statistical multiplexer, depending on the specific requirements of the system. The transport stream is then passed into a post-processing unit 26. The post-processing unit carries out a number of processes on the transport stream. The main process concerns repositioning and resynchronising the six MPEG signals in the transport stream such that the output is capable of being decoded as an HDTV image again. This is not a straightforward exercise as will be described in greater detail below and still greater detail in our co-pending United Kingdom patent application 9807203.6.. The output from the post processing is a HDTV signal (MP @ HL - Main Profile @ High Level) which is passed to a modulator 28 and then passed via a broadcast medium 30 to a receiver 32. The broadcast medium could take the form of a satellite system, a cable system, a terrestrial system or any other appropriate medium. The system is controlled by a control computer 34. This manages the synchronisation and co-ordination of the whole system.

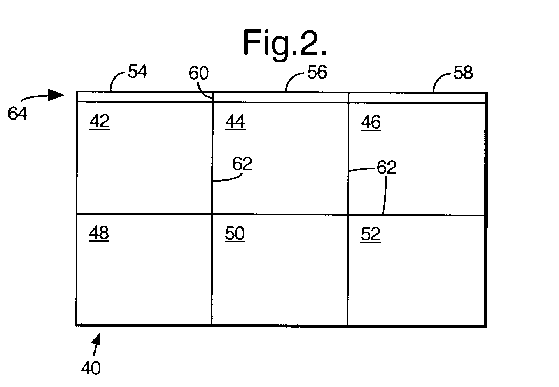

Further details of the pre-processors will now be described with reference to figure 2. An HDTV image is shown as 40. This is an HDTV signal which is 1920 pixels by 1080 pixels. In order to encode the image using standard encoders the image is split into a number of elements. In this case into six elements 42, 44, 46, 48, 50, 52, each being 640 x 540 pixels.

The pre-processor acts on the whole of image 40 before it is split into six elements. As previously indicated the pre-processor carries out all the filtering and preencoding processes on the whole image. The image is then split into the six elements 42, 44, 46, 48, 50 and 52 by the splitter. The encoding processes are carried out on each element of the image. Encoder 18a encodes element 42, encoder 18b encodes element 44 and so on. The encoded elements are then processed at the post processor to enable an encoded high level MPEG compliant bitstream (encoded HDTV bitstream) to be produced.

Each of the encoded elements contains three different types of video frame. These are I-frames, B-frames and P-frames. In order to produce the correct encoded HDTV bitstream, the post processor can only combine frames of the same type into a larger frame of the same type. In other words, I-frames in each element can only be combined to form I-frames in the encoded HDTV bitstream, B-frames to form B-frames in the encoded HDTV bitstream and P-frames to form P-frames in the encoded HDTV bitstream. In addition, it is also essential that the recombined elements have all come from the same original frame of the HDTV image. Thus it is important to ensure that all the encoders code the different elements in the same way. Furthermore, it is also necessary to ensure the post processor combines elements from the same original HDTV frame.

In order for each of the encoders to code in the same way it is necessary to select a structure which is common for all the encoders. Such a structure is know in the art as a GOP or Group of Pictures. The GOP comprises a string of I-, B- and P-frames in a predetermined sequence. The GOP is chosen to be the same for all encoders.

This means that when the post-processor needs to recombine the encoded elements to become the encoded HDTV bitstream, it is possible.

In addition, the Groups of Pictures (GOPs) for each element must be synchronised so that they code each element in the same way. This is achieved in the pre-processor. Firstly the pre-processor adds a vertical interval time code (VITC) onto the outgoing encoded signal for each element. Each encoder is modified so that at a particular time or times in the VITC the selected GOP coding sequence starts or restarts.

The pre-processor also carries out a process of dropping and/or repeating frames so as to synchronise the incoming HDTV signal 10 with the six output signals 16a to 16f. A decision to drop or repeat frames is made on all six of the output signals at the same time and the VITC is added to the signals after the process to drop or repeat has been carried out. This ensures that the GOP structure can only be interrupted once at the encoder. Once the encoders are synchronised to the VITC from the pre-processor, the encoders remain synchronised thereafter. The VITC which can cause resynchronisation may still be sent. These will cause the GOP to restart at the same point as would have been expected by the encoder anyway, thus no visual artefacts will be produced. In order that there are no drop or repeat decisions within the encoders themselves the same clock is used to synchronise the encoders, the multiplexer and the pre-processor. The clock may be generated by the pre-processor or by other means.

The encoders are modified such that the VITC (or clock) generated by the pre-processor is passed in the GOP header. The post-processor can interpret this time code and only recombines frames with the same time code. Thus only frames from the same original HDTV image frame are combined. This ensures that the post-processor can operate as required.

It is important to ensure that the position of each encoded data packet for a given element is known both in time and space. This will ensure that when the elements are recombined to form an encoded HDTV image all the data packets will go in the right place in the right frame.

It is possible to incorporate redundancy into the system by inclusion of extra encoders. In addition, the system can be used for HDTV, standard TV or combinations thereof by control of use of the pre-processing and post-processing units as required and use of the encoders for either HD or SDTV.

It will be appreciated that this invention is not limited to just so called HDTV, but can be used in any system where there is a need to transmit an image that is bigger than the available encoders can cope with.

## Claims

1. A digital television system of the type comprising a splitter for splitting a television image into a spatial array of elements; a plurality of encoders for encoding each of the elements; a combiner for re-combining the encoded elements such that they are capable of regenerating the television image; wherein the television system further includes a co-ordinator which spatially and temporally arranges the encoded elements such that the combiner can recombine the elements to be in the correct position spatially and temporally.

2. The apparatus of claim 1, wherein each encoded element is made up of a plurality of data packets which represent the element of the television image.

3. The apparatus of claim 2, wherein the data packets of each encoded element include a clock indicator which arranges them temporally.

4. The apparatus of claim 3, wherein the combiner uses the clock indicator to facilitate temporal arrangement of the elements.

5. The apparatus of any of claims 2 to 4, wherein the data packets of each of the encoded elements includes a position indicator which arranges them spatially.

6. The apparatus of claim 5, wherein the combiner uses the position indicator to facilitate spatial arrangement of the elements.

7. The apparatus of any preceding claim, wherein the television image is a High Definition Television (HDTV) image.

8. A method of processing a digital television signal comprising splitting a television image into a spatial array of elements; encoding each of the elements with a separate encoder; re-combining the encoded elements such that they are capable of regenerating the television image; wherein the method further includes spatially and temporally arranging the encoded elements such that the re-combination of the elements is correct spatially and temporally.

9. The method of claim 8, further comprising providing each encoded element as a plurality of data packets which represent the element of the television image.

10. The method of claim 9, further comprising providing the data packets of each encoded element including a clock indicator which arranges them temporally.

11. The method of claim 10, wherein the combining step comprises using the clock indicator to facilitate temporal arrangement of the elements.

12. The method of any of claims 9 to 11, further comprising providing the data packets of each of the encoded elements including a position indicator which arranges them spatially.

13. The method of claim 12, wherein the combining step comprises using the position indicator to facilitate spatial arrangement of the elements.

14. The method of any preceding claim, further comprising providing the television image as a High Definition Television (HDTV) image.
